(19) **Europäisches Patentamt**
**European Patent Office**
**Office européen des brevets**

(11) **EP 3 452 871 B1**

(12) **FASCICULE DE BREVET EUROPEEN**

(45) Date de publication et mention
de la délivrance du brevet:
**09.09.2020 Bulletin 2020/37**

(51) Int Cl.:
*G02F 1/1343* (2006.01)    *G02F 1/1362* (2006.01)
*G09G 3/36* (2006.01)    *G02C 7/10* (2006.01)
*G02C 7/08* (2006.01)

(21) Numéro de dépôt: **17725316.8**

(22) Date de dépôt: **27.04.2017**

(86) Numéro de dépôt international:
**PCT/FR2017/050997**

(87) Numéro de publication internationale:
**WO 2017/191393 (09.11.2017 Gazette 2017/45)**

(54) **LENTILLE OPHTALMIQUE INTEGRANT UNE MATRICE ACTIVE TRANSPARENTE A RESEAU DESORDONNE**

BRILLENGLAS MIT INTEGRATION EINER TRANSPARENTEN AKTIVEN MATRIZE MIT UNGEORDNETER ANORDNUNG

OPHTHALMIC LENS INTEGRATING A DISORDERED ARRAY, TRANSPARENT ACTIVE MATRIX

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.05.2016 FR 1654021**

(43) Date de publication de la demande:
**13.03.2019 Bulletin 2019/11**

(73) Titulaire: **Essilor International**
**94220 Charenton-le-Pont (FR)**

(72) Inventeurs:
• **CANO, Jean-Paul**
**94227 Charenton Cedex (FR)**
• **BOVET, Christian**
**94227 Charenton Cedex (FR)**
• **SAUGEY, Anthony**
**London W9 2NF (GB)**

(74) Mandataire: **Santarelli**
**49, avenue des Champs-Elysées**
**75008 Paris (FR)**

(56) Documents cités:
**US-A- 5 114 218**    **US-A1- 2011 176 074**
**US-A1- 2014 098 308**    **US-A1- 2014 172 379**
**US-B2- 6 871 951**

**Description**

DOMAINE DE L'INVENTION

La présente invention se rapporte à une lentille ophtalmique à matrice active transparente. Une lentille ophtalmique est une lentille conçue pour être adaptée à une monture de lunettes afin de protéger l'œil et / ou de corriger la vue et peut être une lentille ophtalmique correctrice ou non-correctrice (également appelée lentille piano ou afocale). Une lentille correctrice peut être unifocale, bifocale, comporter un triple foyer ou être une lentille progressive.

ARRIERE PLAN TECHNOLOGIQUE

Une matrice active transparente comprend, de façon usuelle :

des pixels,
des lignes d'adressage servant à la commande des pixels,
des colonnes de données servant à l'alimentation électrique de pixels,
pour chaque pixel, au moins un transistor relié à une ligne d'adressage et une colonne de données allouées audit pixel.

Dans les lentilles à matrice active connues, les lignes d'adressage et colonnes de données sont rectilignes et dans deux plans différents (et parallèles), mais forment un maillage régulier, généralement carré, d'une surface frontale de la lentille. Dans toute la suite, les termes « *direction axiale de la lentille ou de la matrice* » désignent une direction orthogonale à cette surface frontale.

Dans toute la description, on considère qu'un composant optique (tel une lentille ophtalmique) est « transparent » lorsque l'observation d'une image au travers de ce composant est perçue sans perte significative de contraste. Autrement dit, l'interposition d'un composant optique transparent entre une image et un observateur de celle-ci ne réduit pas significativement la qualité de l'image.

Une première perte de transparence dans une lentille ophtalmique à matrice active résulte de l'emploi de matériaux opaques c'est-à-dire de matériaux ne transmettant pas les rayons lumineux.

Afin d'obtenir une matrice active transparente, pour réaliser les lignes d'adressage et colonnes de données on pourrait utiliser un matériau conducteur transparent tel que l'ITO (acronyme d'*Indium Tin Oxide,* en français oxyde d'indium-étain), à l'instar de ce qui est fait parfois pour une matrice passive.

Cette solution ne peut convenir que pour des matrices actives de faibles dimensions car les matériaux conducteurs transparents connus à l'heure actuelle ne sont pas assez bon conducteurs. En effet, pour compenser des pertes en ligne trop importantes, la largeur des lignes devrait être augmentée ce qui ne peut être fait de façon illimitée. On est donc contraint de limiter la longueur des lignes et donc la taille de la matrice afin de garantir une alimentation correcte en bout de ligne.

Il est par conséquent finalement préférable de réaliser les lignes d'adressage et colonnes de données de la matrice active d'une lentille ophtalmique en un matériau conducteur métallique (meilleur conducteur) tel que le cuivre, lequel matériau n'est pas transparent. Il en résulte une première perte de transparence de la matrice, qui peut être limitée en réduisant tant que faire se peut la largeur des lignes et colonnes.

De la même manière, la présence des transistors augmentent la proportion de surface opaque de la matrice active. Des technologies sont connues pour réaliser des transistors transparents mais leur prix de revient extrêmement élevé n'est pas compatible avec une production industrielle de composants optiques à usage commun tels des verres ophtalmiques ou des écrans d'affichage par exemple.

Une deuxième perte de transparence, au sens du terme « transparent » donné ci-dessus, résulte de la diffraction macroscopique provoquée par le réseau de lignes et colonnes de la matrice active.

En effet chaque ligne ou colonne possède une largeur (parallèlement à une surface frontale de la lentille ophtalmique) limitée qui engendre une diffraction microscopique de la lumière qui arrive sur la matrice active au niveau de la ligne ou colonne. Les fractions d'un flux lumineux incident qui sont diffractés respectivement par toutes les lignes et colonnes sont concentrées dans certaines directions isolées. Une diffraction macroscopique en résulte, consistant en une concentration de la lumière transmise ou réfléchie par la matrice dans certaines directions : pour une matrice active usuelle à réseau carré, la formation d'une croix lumineuse apparaît dans le faisceau transmis ou réfléchi.

Les transistors participent aussi à ce phénomène de diffraction macroscopique.

Le document US 2004/0098308 A1 divulgue un écran LCD 3D sans lunettes comprenant une matrice active pourvue de lignes d'adressage et de colonnes de données ondulant de façon périodique. Le document US 2014/0172379 A1 divulgue un procédé de conception d'un dispositif optique comprenant un maillage aléatoire d'éléments. Le procédé permet d'obtenir une réduction des effets de moiré lorsqu'un tel dispositif optique est superposé à un dispositif optique comprenant un maillage périodique d'éléments. Le procédé génère en premier lieu un réseau de lignes et colonnes virtuelles ondulant de façon non périodique. Les éléments du maillage aléatoire sont alors disposés à l'intersection de ces lignes et colonnes virtuelles.

## OBJET DE L'INVENTION

L'invention vise à pallier ces inconvénients et à proposer une lentille ophtalmique à matrice active ayant une transparence améliorée malgré la présence de lignes et colonnes métalliques (et donc opaques), c'est-à-dire une lentille ophtalmique à matrice active dans laquelle les phénomènes de diffraction macroscopique sont significativement réduits, voire annihilés, sans augmentation substantielle du prix de revient de la lentille ophtalmique par rapports aux lentilles connues, ni dégradation des performances de la matrice active notamment en termes de temps de réponse.

A cette fin, l'invention propose une lentille ophtalmique dotée d'une matrice active comprenant :

des pixels,
des lignes d'adressage servant à la commande des pixels, chaque ligne d'adressage s'étendant entre deux bornes d'extrémité opposées, sans couper une autre ligne ni former une boucle, les lignes d'adressage étant en un matériau conducteur métallique (choisi pour ses propriétés de conduction électrique, mais par conséquent opaque -non transparent-),
des colonnes de données servant à l'alimentation électrique des pixels, chaque colonne de données s'étendant entre deux bornes d'extrémité opposées, sans couper une autre colonne ni former une boucle, les colonnes de données étant en un matériau conducteur métallique (par conséquent opaque),
chaque pixel, au moins un transistor agissant comme un interrupteur qui permet de relier électriquement une électrode (surface conductrice) propre audit pixel à une colonne de données, lequel interrupteur est commandé par une ligne d'adressage ainsi associée au pixel.

De façon usuelle, chaque pixel, de même que l'électrode qui lui est propre, est de préférence délimité par une projection (sur la face frontale de la matrice) de deux lignes d'adressage successives et par une projection de deux colonnes de données successives, le transistor étant situé dans un coin du pixel.

Mais l'invention n'est pas limitée à ce cas de figure : elle s'applique aussi au cas d'une matrice ayant des pixels qui sont chacun relié à une ligne et une colonne qui traversent ledit pixel, via un transistor qui occupe une position centrale dans le pixel.

Par ailleurs, les lignes d'adressage et les colonnes de données peuvent être dans des plans différents et les lignes d'adressage sont dans un plan différent de celui comportant les électrodes propres aux pixels, qui peut être le plan contenant les colonnes de données. Alternativement, les lignes d'adressages et les colonnes de données sont principalement dans un même plan, les lignes ou les colonnes étant déviées dans un autre plan au niveau de chaque croisement entre ligne et colonne, de façon à ce que lignes et colonnes ne se coupent pas. Dans ce dernier cas, des excroissances conductrices peuvent relier les lignes et les colonnes aux transistors.

La lentille ophtalmique selon l'invention est caractérisée en ce que :

chaque ligne d'adressage ondule de manière continue mais non périodique de part et d'autre d'une droite, dite droite d'adressage théorique, reliant les deux bornes d'extrémité de ladite ligne d'adressage. En d'autres termes, chaque ligne d'adressage présente un ou plusieurs points d'inflexion entre ses bornes d'extrémité. Bien que chaque ligne d'adressage puisse être courbe sur toute sa longueur (entre ses deux bornes d'extrémité), le terme « onduler » n'exclue pas la possibilité que la ligne d'adressage (ou la colonne de données, telle que définie ci-après) comprenne un ou plusieurs segments rectilignes,
de même, chaque colonne de données ondule de manière continue mais non périodique de part et d'autre d'une droite, dite droite de données théorique, reliant les deux bornes d'extrémité de la colonne de données.

Avantageusement, la lentille ophtalmique selon l'invention présente aussi une ou plusieurs des caractéristiques suivantes :

l'amplitude en valeur absolue des oscillations de chaque ligne d'adressage par rapport à la droite d'adressage théorique correspondante est une variable aléatoire ou pseudo-aléatoire ayant un écart-type à trois sigmas inférieur ou égal à une période moyenne d'alternance des droites d'adressage théoriques, préférentiellement inférieur ou égal aux deux-tiers, à la moitié, ou même au tiers de ladite période moyenne d'alternance des droites d'adressage théoriques ;
la fréquence moyenne des oscillations de chaque ligne d'adressage, définie comme la moyenne du spectre de fréquences spatiales de la ligne d'adressage, est comprise entre $1/10^{ème}$ et 10 fois la fréquence moyenne à laquelle les lignes d'adressages croisent les colonnes de données ; comme expliqué plus haut, les lignes d'adressage et colonnes de données sont dans des plans différents au moins au niveau de chaque point de « croisement » entre une ligne et une colonne, les termes « croisement » et « croiser » ne signifient donc pas que les lignes et colonnes se coupent (ce qui provoquerait un court-circuit) mais qu'elles se chevauchent sans se toucher à leurs points de croisement ;

l'amplitude en valeur absolue des oscillations de chaque colonne de données par rapport à la droite de données théorique correspondante est une variable aléatoire ayant un écart-type à trois sigmas inférieur ou égal à une période moyenne d'alternance des droites de données théoriques, préférentiellement inférieur ou égal aux deux-tiers, à la moitié, ou même au tiers de ladite période moyenne d'alternance des droites de données théoriques ;

la fréquence moyenne des oscillations de chaque colonne de données est comprise entre 1/10ème et 10 fois la fréquence moyenne à laquelle les colonnes de données croisent les lignes d'adressages ;

étant précisé que :

la période moyenne d'alternance des droites d'adressage théoriques est une moyenne, par exemple une moyenne arithmétique ou éventuellement une moyenne géométrique, de l'écartement entre les droites d'adressage théoriques ; il s'agit notamment de la moyenne (arithmétique par exemple) de l'écartement entre deux bornes d'extrémité successives de lignes d'adressage d'un côté (ou de l'autre) de la matrice, dans le cas de droites d'adressage théoriques parallèles ;

de même, la période moyenne d'alternance des colonnes de données est une moyenne, par exemple une moyenne arithmétique, de l'écartement entre les droites de données théoriques (écartement que l'on peut par exemple mesurer au niveau des bornes d'extrémité, indifféremment d'un côté ou de l'autre de la matrice, si les droites de données théoriques sont parallèles).

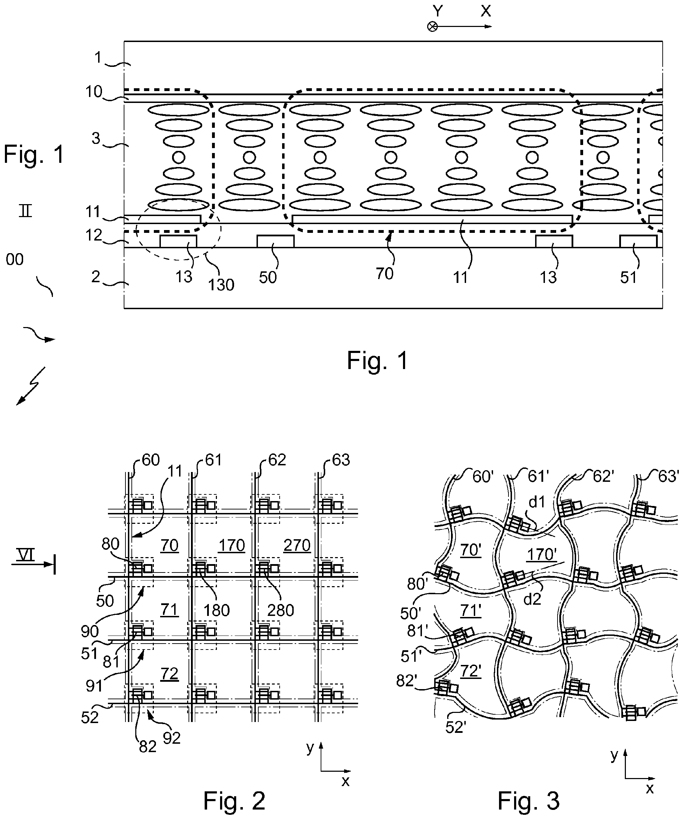

L'invention prévoit ainsi d'introduire du désordre dans une structure régulière de départ, de façon à répartir le plus uniformément possible les directions de diffraction et obtenir une matrice active à structure déformée et irrégulière limitant les phénomènes d'interférence cohérente dans la diffraction, telle la matrice déformée illustrée à la figure 3. Le désordre est introduit par une ondulation non-périodique des lignes d'adressage et/ou colonnes de données.

Ainsi, l'impact de la diffraction sur l'image transmise par un composant optique comprenant cette structure déformée et irrégulière sera reparti de manière uniforme sur toute la surface du composant optique. Autrement dit, la répartition relative des intensités transmises par ce composant optique sera inchangée.

En particulier, pour le domaine ophtalmique, un tel désordre conduit à obtenir une lentille présentant en transmission un "*haze*" (tel que défini dans la norme ASTM D1003) uniforme sur toute sa surface.

De plus, l'amplitude des ondulations peut être rendue aléatoire pour augmenter le désordre.

Avantageusement et selon l'invention, la ligne moyenne de chaque ligne d'adressage est la droite d'adressage théorique correspondante ; ce qui signifie que la ligne d'adressage est centrée « verticalement » sur la droite d'adressage théorique. Cette caractéristique, combinée à une amplitude ayant un écart-type à trois sigmas limité comme indiqué supra par rapport à la période moyenne d'alternance des lignes d'adressage, permet de réduire considérablement la probabilité, lors de la conception de la matrice, que deux lignes d'adressage successives se croisent ou se touchent, limitant ainsi la probabilité de concevoir un système comportant un risque de court-circuit entre deux lignes.

Néanmoins, dans le cas d'une distribution gaussienne de l'amplitude des oscillations des lignes d'adressage, la probabilité de collision de deux lignes d'adressage ne peut pas être complètement nulle. Dans un mode de réalisation d'un procédé de conception d'une matrice selon l'invention, il peut être prévu une étape de vérification de la présence éventuelle de points d'intersection ou de contact entre deux lignes d'adressage, respectivement deux colonnes de données, successives ainsi qu'une étape de suppression desdits points d'intersection ou de contact, comportant le cas échéant, une modification locale de la forme de l'une, de l'autre ou des deux lignes d'adressage, respectivement colonnes de données, concernées.

Selon un autre mode de réalisation, la fonction de répartition de l'amplitude des oscillations est bornée en amplitude. Par exemple, l'amplitude en valeur absolue des oscillations de chaque ligne d'adressage par rapport à sa droite d'adressage théorique est inférieure ou égale à la période moyenne d'alternance des lignes d'adressage.

De façon analogue, la ligne moyenne de chaque colonne de données est de préférence la droite de données théorique correspondante (en d'autres termes, la colonne de données est centrée « horizontalement » sur sa droite de donnée théorique). Les remarques et variantes explicitées ci-dessus pour les lignes d'adressage s'appliquent *mutatis mutandis* aux colonnes de données.

Par ailleurs, la fréquence moyenne des ondulations peut être différenciée de la fréquence de croisement des lignes d'adressages avec les colonnes de données, contribuant ainsi à ajouter du désordre dans la position des croisements en formant un réseau dépourvu d'ordre à longue distance.

La fréquence moyenne des ondulations est typiquement comprise entre 1/10ème et 10 fois, de préférence entre 1/5ème et 5 fois, la fréquence moyenne à laquelle les colonnes de données croisent les lignes d'adressage.

Dans un mode de réalisation particulier, la fréquence moyenne des ondulations et la fréquence moyenne à laquelle les colonnes de données croisent les lignes d'adressage ne sont pas commensurables. Ainsi, il n'y a aucune répétition périodique de la localisation des nœuds du réseau et la lumière diffractée est répartie de manière la plus uniforme sur la surface de la lentille.

Avantageusement et selon l'invention, la matrice active possède également la caractéristique suivante : les nœuds de la matrice active forment un réseau aléatoire ou pseudo-aléatoire, étant précisé que le terme « *nœud* » désigne, de façon usuelle, un point de croisement entre une ligne d'adressage et une colonne de données c'est-à-dire un point d'intersection entre ladite ligne d'adressage et une projection de ladite colonne de données sur le plan contenant les lignes d'adressage. En d'autres termes, il n'y a pas d'ordre à longue distance dans la matrice.

Il est à noter que les nœuds sont, de préférence, repérés par la présence d'un transistor. Le transistor est généralement en contact électrique avec la ligne d'adressage par sa grille (ou « gate » en anglais), et avec la colonne de donnée par une de ses électrodes, source ou drain.

Dans un mode de réalisation possible, au moins une ligne d'adressage ou colonne de donnée comporte une succession d'arcs de cercle. Dans cette succession, à la jonction entre deux arcs de cercle, les tangentes sont de préférence confondues.

Dans un mode de réalisation possible de l'invention, les droites d'adressage théoriques sont parallèles entre elles.

Dans un mode de réalisation possible de l'invention, les droites de données théoriques sont parallèles entre elles.

Dans un mode de réalisation de l'invention, l'aire des pixels dans la face frontale, c'est-à-dire l'aire des électrodes propres desdits pixels, varie avec un écart-type inférieur ou égal à 10%, de préférence inférieur ou égal à 5%, voire inférieur ou égal à 2% d'un pixel à l'autre. La capacité primaire d'un pixel étant proportionnelle à son aire, un écart-type faible dans la distribution des aires (comme précédemment défini) se traduit par un faible écart-type dans la distribution des capacités primaires des pixels, garantissant une quasi uniformité dans la réponse des pixels.

Dans un mode de réalisation possible, la matrice active comporte des lignes de capacité de stockage procurant aux pixels des capacités secondaires. A chaque ligne d'adressage correspond alors une ligne de capacité de stockage qui, selon l'invention, suit les oscillations de ladite ligne d'adressage. Chaque pixel dispose alors d'une capacité secondaire proportionnelle à l'aire de la portion, ici appelée portion unitaire, de ligne de capacité de stockage s'étendant en regard (selon la direction axiale) dudit pixel, c'est-à-dire s'étendant entre les projections des deux colonnes de données successives qui délimite ledit pixel.

Dans une version préférée de ce mode de réalisation, les lignes de capacité de stockage sont conçues de façon à ce que les capacités secondaires des pixels compensent des variations d'aire (et donc de capacité primaire) entre pixels. Ce qui permet de stabiliser le système, notamment en fréquence. L'aire de chaque portion unitaire de ligne de capacité de stockage est donc ajustée de façon à ce que les pixels aient une capacité totale (capacité primaire + capacité secondaire) qui varie peu d'un pixel à un autre (par exemple qui varie avec un écart-type inférieur ou égal à 10%, de préférence inférieur ou égal à 5%, voire inférieur ou égal à 2%).

Cet ajustement peut être obtenu en faisant varier la largeur de chaque portion unitaire de ligne de capacité de stockage d'un pixel à un autre (en fonction de la longueur de ladite portion unitaire, déterminée par l'emplacement des nœuds de la matrice, qui eux-mêmes vérifient de préférence un désordre donné comme expliqué précédemment).

Dans le cas d'une lentille ophtalmique dotée d'une matrice selon l'invention ne vérifiant pas les spécificités susmentionnées concernant les capacités primaires, ou l'aire des pixels, et les capacités secondaires, il reste toutefois possible d'obtenir une réponse uniforme des pixels en contrôlant le pilotage des pixels, par exemple au moyen d'une table de compensation des niveaux de gris pour chaque pixel.

Comme indiqué en introduction, chaque pixel comprend un ou plusieurs transistors pour son pilotage. Un transistor présente usuellement une forme globalement parallélépipédique avec une direction longitudinale correspondant à sa plus grande longueur parallèlement à la face frontale de la matrice.

Dans un mode de réalisation préféré de l'invention, les transistors de la matrice active présentent des directions longitudinales aléatoires ou pseudo-aléatoires. Les diverses arêtes des transistors sont alors orientées dans des directions différentes de celles des arêtes correspondantes des transistors voisins, ce qui permet de limiter la diffraction macroscopique causée par les transistors et en particulier par les arêtes desdits transistors. Ceci améliore donc encore la transparence de la matrice active.

Dans un autre mode de réalisation de l'invention, la matrice active comprend de plus un cache pour chaque transistor. Les caches sont opaques et protègent ainsi les transistors des interférences lumineuses ; ils masquent les arêtes, empêchant la diffraction macroscopique par lesdites arêtes, la remplaçant par une diffraction liée au cache, plus facilement accommodable.

Selon une première version, les caches présentent un bord circulaire ou approximativement circulaire, de sorte que la diffusion des rayons lumineux au niveau des caches, c'est-à-dire au niveau des transistors, ne s'effectue dans aucune direction privilégiée spécifique mais s'effectue dans toutes les directions. La diffusion de lumière est répartie dans toutes les directions de façon uniforme si le cache est parfaitement circulaire. La diffraction macroscopique liée aux transistors est alors réduite, limitant ainsi la perte de transparence de la matrice par diffraction due aux caches et transistors.

Selon une deuxième version, les caches sont ajustés aux transistors c'est-à-dire qu'ils ont une forme et des dimensions (vus depuis la face frontale de la matrice) similaires aux transistors, et les caches et transistors présentent des directions longitudinales (direction suivant la plus grande dimension du cache) aléatoires ou pseudo-aléatoires. En effet, l'utilisation de caches en forme de disque alors que les transistors ont des sections polygonales, engendre une perte de transparence de la matrice par augmentation de la surface de matériau opaque de la matrice. Il peut donc être avantageux de réduire la surface occultée par les caches en leur imposant une forme autre qu'un disque et, dans ce cas, de prévoir d'orienter de façon aléatoire ou pseudo-aléatoire lesdits caches (et transistors).

Par ailleurs selon un autre mode de réalisation, les caches des transistors peuvent être de forme différente d'un transistor à l'autre, voire avec un contour aléatoire.

De préférence, la direction longitudinale de chaque transistor et/ou de son cache forme un angle aléatoire ou pseudo-aléatoire compris entre -22,5° et +22,5° avec la droite d'adressage théorique de la ligne d'adressage auquel le transistor est relié. Les inventeurs ont identifié que cette limite angulaire permettait de créer suffisamment de désordre dans l'orientation des transistors pour obtenir une amélioration satisfaisante de la transparence de la matrice par diminution de la diffraction, alors que des angles supérieurs rendent la réalisation de la matrice trop délicate.

Dans un mode de réalisation possible de l'invention, de façon connue, la matrice active comprend de plus un masque d'ombrage (« *shadow mask* », en anglais) pour chaque ligne d'adressage et/ou colonne de données, et/ou pour chaque ligne de capacité de stockage (lorsque celles-ci sont présentes). De tels masques d'ombrage augmentent la surface de matériau opaque que contient la matrice mais limitent les pertes de modulation en phase ou en indice, ce dernier avantage pouvant s'avérer supérieur à l'inconvénient précédemment mentionné.

De préférence le masque d'ombrage couvre toute partie de la matrice active qui ne module pas la phase de la lumière, c'est-à-dire qui n'est pas en regard d'une électrode d'un pixel. Cela concerne en particulier les zones entres les pixels, c'est-à-dire entre les lignes d'adressage, respectivement les colonnes de données, et les électrodes des pixels.

Dans un mode de réalisation de l'invention, au moins certains des masques d'ombrage ont un contour qui est ondulé, par exemple de façon aléatoire ou pseudo-aléatoire, par rapport à la ligne d'adressage ou colonne de donnée ou ligne de capacité de stockage qu'il masque.

Dans un mode de réalisation possible de l'invention, les pixels contiennent des substances d'indices optiques différents.

Dans un mode de réalisation possible de l'invention, chaque pixel est fermé par des parois. Alternativement pour une matrice dépourvue de parois, un pixel est le volume délimité par la surface conductrice propre au pixel (électrode du pixel) et relié à une électrode du transistor autre que celle reliée à la colonne de donnée et celle reliée à la ligne d'adressage allouées au pixel.

En particulier, les pixels peuvent comporter une solution active comprise entre deux électrodes. Au moins une des deux électrodes a une surface qui est propre à un pixel. L'autre électrode peut avoir la même surface que celle qui est propre au pixel ou peut être commune à plusieurs pixels, voir à tous les pixels. Dans certaines applications la solution active n'est pas en contact électrique direct avec les électrodes et peut être séparée des électrodes par des isolants électriques ; pour d'autres applications, la solution active est en contact électrique avec les électrodes.

La solution active comprend un élément actif qui peut être un élément électro-chromique, une solution de cristaux liquides, au d'autres éléments influencés par une tension appliquée entre les deux électrodes du pixel.

La matrice active d'une lentille selon l'invention peut être formée directement sur une face d'un substrat rigide transparent, laquelle face peut être convexe, concave ou plane. La matrice peut, en variante, être formée sur une face d'un film souple transparent qui est ensuite rapporté, et par exemple collé, sur un substrat rigide transparent.

La lentille ophtalmique selon l'invention peut être obtenue par un procédé de conception d'une matrice active pour lentille ophtalmique. Ce procédé comprend les étapes suivantes, exécutées dans l'ordre où elles sont définies :

sélection d'une structure matricielle numérique régulière, comprenant des droites d'adressage sensiblement parallèles écartées les unes des autres avec une période verticale sensiblement constante, et des droites de données sensiblement parallèles écartées les unes des autres avec une période horizontale sensiblement constante, les termes « *structure matricielle numérique* » désignant une représentation numérique d'une structure matricielle ; les droites d'adressage étant parallèles entre elles, de même que les droites de données, la structure matricielle numérique régulière sélectionnée est une matrice à mailles polygonales ; si les droites de données sont de plus orthogonales aux droites d'adressage, la structure matricielle numérique sélectionnée est une matrice à mailles carrées ou rectangulaires ;
déformation de la structure matricielle numérique régulière initialement sélectionnée, afin d'introduire du désordre et de répartir, de préférence uniformément, les directions de diffraction. A l'issue de cette étape, une matrice numérique déformée (c'est-à-dire une représentation numérique d'une matrice déformée) est obtenue.

Dans un mode de réalisation, cette étape de déformation s'effectue en définissant une ligne d'adressage à partir de chaque droite d'adressage initiale de la structure matricielle numérique régulière précédemment sélectionnée et une colonne de données à partir de chaque droite de données initiale de la structure matricielle numérique régulière, de telle sorte que :

chaque ligne d'adressage ondule de manière continue mais non périodique de part et d'autre de la droite d'adressage initiale correspondante (à noter que les droites d'adressage de la structure matricielle numérique régulière initiale correspondent aux droites d'adressage théoriques définies supra).
chaque colonne de données ondule de manière continue mais non périodique de part et d'autre de la droite de données initiale (à noter que les droites de données de la structure matricielle régulière initiale correspondent aux droites de données théoriques définies supra).

Il peut aussi être prévu que :

l'amplitude en valeur absolue des oscillations de chaque ligne d'adressage par rapport à la droite d'adressage initiale correspondante (de la structure matricielle régulière) est une variable aléatoire ayant un écart-type à trois sigmas inférieur ou égal à une période moyenne d'alternance -telle que définie supra- des droites d'adressage initiales, préférentiellement inférieur ou égal aux deux-tiers, à la moitié, ou même au tiers de ladite période moyenne d'alternance des droites d'adressage initiales,
la fréquence moyenne des oscillations de chaque ligne d'adressage, définie comme la moyenne du spectre de fréquences spatiales de la ligne d'adressage, est comprise entre $1/10^{ème}$ et 10 fois la fréquence moyenne à laquelle les lignes d'adressage croisent les colonnes de données ;
l'amplitude en valeur absolue des oscillations de chaque colonne de données par rapport à la droite de données initiale correspondante est une variable aléatoire ayant un écart-type à trois sigmas inférieur ou égal à une période moyenne d'alternance (telle que définie supra) des droites de données initiales, préférentiellement inférieur ou égal aux deux-tiers, à la moitié, ou même au tiers de ladite période moyenne d'alternance des droites de données initiales,
la fréquence moyenne des oscillations de chaque colonne de données, définie comme la moyenne du spectre de fréquences spatiales de la colonne de données, est comprise entre $1/10^{ème}$ et 10 fois la fréquence moyenne à laquelle les colonnes de données croisent les lignes d'adressage.

Par la suite, les termes « *segment unitaire de droite d'adressage* » désignent un segment de droite d'adressage délimité par deux nœuds successifs de la structure matricielle numérique régulière initiale situés sur ladite droite d'adressage, autrement dit un segment de droite d'adressage délimité par deux droites de données successives de la structure matricielle numérique régulière initiale. De façon analogue, les termes « *segment unitaire de droite de données* » désignent un segment de droite de données délimité par deux nœuds successifs de la structure matricielle numérique régulière initiale situés sur ladite droite de données, autrement dit un segment de droite de données délimité par deux droites d'adressage successives de la structure matricielle numérique régulière initiale.
Dans un mode de réalisation, l'étape de déformation comprend le remplacement de chaque segment unitaire de droite d'adressage par un arc de cercle ou par une succession d'arcs de cercle et le remplacement de chaque segment unitaire de droite de données par un arc de cercle ou par une succession d'arcs de cercle. La matrice obtenue est alors qualifiée de matrice numérique ondulée.
Ce mode de réalisation préféré n'exclut pas la possibilité, dans une variante moins performante, de conserver quelques segments unitaires rectilignes de droites d'adressage ou de droites de données, dans la matrice numérique déformée.
Dans un autre mode réalisation, qui peut être combiné avec le mode de réalisation précédent, l'étape de déformation comprend le déplacement de chaque nœud de la structure matricielle numérique régulière initiale. La matrice obtenue est alors qualifiée de matrice numérique irrégulière.
Avantageusement, les nœuds sont déplacés selon des directions de déplacement choisies de façon aléatoire ou pseudo-aléatoire.
De préférence, les nœuds sont déplacés de façon à ce que la distance euclidienne entre deux nœuds directement voisins sur une même ligne d'adressage, respectivement une même colonne de données, soit une variable aléatoire dont l'écart-type est compris entre 10% et 40%, de préférence entre 20% et 30% de la distance moyenne entre deux nœuds directement voisins de ladite ligne ou colonne.
Dans le cas de la combinaison de ce mode de réalisation (avec déplacement aléatoire ou pseudo-aléatoire des nœuds) avec le mode de réalisation précédent (avec remplacement des segments de droite entre nœuds par des arcs de cercle ou des successions d'arcs de cercle), les deux étapes de déformation peuvent être réalisées dans un ordre ou dans l'autre. On peut par exemple déplacer les nœuds dans un premier temps de façon à obtenir une matrice numérique irrégulière, puis relier chaque nœud à ses voisins directs (uniquement les nœuds voisins auxquels ledit nœud était déjà lié dans la structure matricielle numérique régulière initiale) par un arc de cercle ou plusieurs arcs de cercle en succession, comme précédemment expliqué, formant ainsi une matrice numérique ondulée sur la base des nœuds de la matrice numérique irrégulière précédente, ou, inversement, former une matrice irrégulière en délaçant les nœuds d'une matrice ondulée préalablement formée.

Dans un mode réalisation du procédé de conception, le procédé comprend de plus l'une ou plusieurs des caractéristiques suivantes :

il comprend une étape supplémentaire de création de désordre dans l'orientation de transistors, dans laquelle des directions sont définies de façon aléatoire ou pseudo-aléatoire et affectées à chaque nœud de la matrice numérique déformée, pour correspondre à une direction longitudinale d'un transistor ensuite positionné audit nœud,

dans l'étape de création de désordre dans l'orientation des transistors, les directions longitudinales des transistors sont définies de façon aléatoire ou pseudo-aléatoire de telle sorte que chaque direction longitudinale forme un angle compris entre -22,5° et 22,5° avec la droite d'adressage initiale passant par le nœud auquel la direction longitudinale est affectée, ce, afin de garantir une réalisation aisée de la matrice active,

le procédé comprend une étape supplémentaire d'optimisation de capacités primaires, comprenant par exemple une étape de calcul de l'aire de chacune des mailles de la matrice numérique déformée et une étape d'ajustement de la position des nœuds de façon à ce que l'aire des mailles de la matrice numérique déformée varie avec un écart-type inférieur ou égal à 10%, de préférence inférieur ou égal à 5%, préférentiellement 2%, voire 1% ;

l'étape supplémentaire d'optimisation des capacités primaires utilise un algorithme d'optimisation de type gradient de descente ;

le procédé comprend une étape supplémentaire d'optimisation de capacités secondaires, chaque ligne d'adressage de la matrice numérique déformée étant doublée par une ligne de capacité de stockage qui suit les mêmes oscillations. Cette étape supplémentaire d'optimisation des capacités secondaires comprend le calcul de l'aire des segments unitaires de ligne de capacité de stockage, un segment unitaire étant délimité par deux colonnes de données successives, et un ajustement de la largeur de chaque segment unitaire de ligne de capacité de stockage de façon à ce que l'aire desdits segments varie avec un écart-type qui inférieur ou égal à 10%, de préférence inférieur ou égal à 5%, voire 2%. En variante, tous les segments unitaires de ligne de capacité de stockage sont remplacés par un même segment, de longueur et de largeur uniques prédéterminées. A noter que dans toute la description, on entend par *« longueur d'un segment »,* de façon usuelle, la dimension de celui-ci mesurée en suivant la courbe dudit segment d'une extrémité à l'autre du segment (il ne s'agit donc pas de la distance euclidienne entre les deux extrémités du segment).

## BREVE DESCRIPTION DES DESSINS

D'autres détails et avantages de la présente invention apparaîtront à la lecture de la description suivante, qui se réfère aux dessins schématiques annexés et porte sur des modes de réalisation de l'invention, fournis à titre d'exemples non limitatifs et pouvant être combinés. Sur ces dessins :

La figure 1 est une vue schématique en coupe transversale d'une partie d'une matrice active classique à cristal liquide.

La figure 2 est une vue de dessus schématique d'un premier exemple de structure matricielle régulière classique d'une matrice active, de maille carrée.

La figure 3 est vue de dessus schématique d'une matrice active selon l'invention obtenue à l'aide d'un procédé par déformation de la structure matricielle régulière de la figure 2.

La figure 4 est une vue de dessus schématique d'un deuxième exemple de structure matricielle régulière classique d'une matrice active, aussi de maille carrée et comportant des caches au niveau des transistors.

La figure 5 est une vue de dessus schématique d'une matrice active selon l'invention obtenue à l'aide d'un procédé par déformation de la structure matricielle régulière de la figure 4.

La figure 6 est une vue de dessus schématique d'un troisième exemple de structure matricielle régulière classique d'une matrice active, également de maille carrée et comportant des caches au niveau des transistors et des masques d'ombrage au niveau des droites d'adressage et des droites de données.

La figure 7 est vue de dessus schématique d'une matrice active selon l'invention obtenue à l'aide d'un procédé par déformation de la structure matricielle régulière de la figure 6.

## DESCRIPTION DETAILLEE D'EXEMPLES DE REALISATION

Dans toute la description les termes « segment unitaire » désignent un segment de ligne entre deux nœuds consécutifs de la matrice, que la ligne considérée soit une ligne d'adressage, une colonne de données ou une ligne de capacité secondaire, qu'elle soit courbe ou droite.

La figure 1 illustre une matrice à cristal liquide comprenant une première couche de verre 1 et une deuxième couche de verre 2 enfermant successivement une première électrode ITO 10 (qui recouvre toute la surface de la première couche de verre 1), une couche de cristal liquide 3, des secondes électrodes ITO 11 d'aire carrée et une couche d'isolant 12 en SiN. A titre d'exemple et approximativement, l'épaisseur de chaque couche de verre 1, 2 est de 1 mm, celle de la première électrode ITO 10 et des secondes électrodes ITO 11 est de 100 nm, celle de la couche d'isolant 12 est de 400 nm, et la couche de cristal liquide 3 mesure 4,5 $\mu$m d'épaisseur. Par souci de clarté, les proportions ne sont pas respectées dans les figures annexées, les éléments les plus petits étant grossis par rapport aux autres pour en faciliter la lecture.

Chaque seconde électrode ITO 11 s'étend entre deux lignes d'adressage consécutives 50, 51 selon la direction X et entre deux colonnes de données consécutives 60, 61 selon la direction Y (voir par exemple fig. 2, les colonnes de données n'apparaissant pas dans la coupe de la fig. 1). L'ensemble de la cellule s'étendant entre deux lignes d'adressage 50, 51 et entre deux colonnes de données 60, 61 est un pixel 70, dont les dimensions frontales en X et Y sont celles de la seconde électrode ITO 11 correspondante. La première électrode ITO 10 est commune à l'ensemble des pixels de la matrice active, tandis que chaque seconde électrode ITO 11 est propre à un pixel. Les électrodes ITO 10, 11 constituent une capacité (le cristal 3 intermédiaire étant isolant) appelée ici capacité primaire du pixel, également connue sous les appellations « capacité de pixel » ou « capacité de cristal liquide ».

Une capacité secondaire 130 est formée, pour chaque pixel, entre la seconde électrode ITO 11 et une ligne de capacité de stockage 13. Dans une matrice active classique, chaque ligne de capacité de stockage 13 est une droite continue de largeur constante, parallèle aux droites d'adressage 50, 51. Dans une matrice déformée selon l'invention, chaque ligne de capacité de stockage est une ligne courbe, continue ou discontinue, qui suit les mêmes oscillations que la ligne d'adressage 50' du pixel correspondant et qui peut être de largeur variable (d'un pixel à l'autre) comme expliqué plus loin.

Une matrice active telle celle vue en coupe à la figure 1 se trouve par exemple dans un écran d'affichage. Les écrans connus possèdent tous une structure matricielle régulière, par exemple une structure matricielle à mailles carrées telle celle illustrée à la figure 2. Les lignes d'adressage 50-52.... d'une telle structure régulière sont des droites parallèles. De même, les colonnes de données 60-63... sont des droites parallèles. Chaque pixel 70, 71, 72, 170, 270..., de même que chaque électrode ITO 11 correspondante, est par conséquent carré (vu de dessus), sans tenir compte du coin tronqué par le transistor qui sert à sa commande.

Chaque pixel 70, 71, 72... est commandé par un transistor 80, 81, 82... agencé dans un coin du pixel et relié à une ligne d'adressage 50, 51, 52... (côté grille ou base du transistor) ainsi qu'à une colonne de données 60 (côté source ou émetteur du transistor). A chaque pixel sont ainsi associées une ligne d'adressage et une colonne de données via le transistor correspondant. Le transistor agit comme un interrupteur : lorsqu'un courant circule dans une ligne d'adressage 50 (interrupteurs 80, 180, 280... en position fermée), les pixels 70, 170, 270... commandés par cette ligne d'adressage sont alimentés par le courant circulant dans leur colonne de données respective 60, 61, 62.... Lorsqu'aucun courant ne circule dans la ligne d'adressage 50 (interrupteurs 80, 180, 280... en position ouverte), les pixels commandés par cette ligne (pixels 70, 170, 270...) ne reçoivent aucun courant et sont donc éteints ou inactifs.

L'invention prévoit d'introduire du désordre dans une structure régulière de départ, de façon à répartir le plus uniformément possible les directions de diffraction et obtenir une matrice active à structure déformée et irrégulière limitant les phénomènes d'interférence cohérente dans la diffraction, telle la matrice déformée illustrée à la figure 3.

La matrice déformée de la figure 3, qui est conforme à l'invention et que l'on peut avantageusement construire à partir de la structure matricielle régulière de la figure 2, comprend des lignes d'adressage 50', 51', 52' formées par une succession d'arcs de cercle. Chaque ligne d'adressage 50', 51', 52' ondule de part et d'autre d'une droite théorique d'adressage reliant deux bornes d'adressage (non représentées), c'est-à-dire reliant les deux extrémités de la ligne d'adressage initiale de la matrice régulière. La droite théorique d'adressage au sens des revendications annexées correspond à la ligne d'adressage 50, 51, 52 de la structure régulière initiale.

De façon analogue, la matrice active comprend des colonnes de données 60', 61', 62' non rectilignes, formées par des successions d'arcs de cercle. Chaque colonne de données 60', 61', 62' ondule ainsi de part et d'autre d'une droite théorique de données correspondant à la colonne 60, 61, 62 de la structure matricielle régulière initiale.

Par ailleurs, dans un mode de réalisation, les transistors 80', 81', 82' présentent des directions longitudinales $d_1$, $d_2$... différentes les unes des autres, au moins pour les transistors se trouvant proches voisins. En particulier, les directions longitudinales n'ont pas d'ordre à courte distance, à moyenne distance et préférablement n'ont pas d'ordre à grande distance, afin de limiter aussi les interférences cohérentes des rayons diffractés au niveau des transistors.

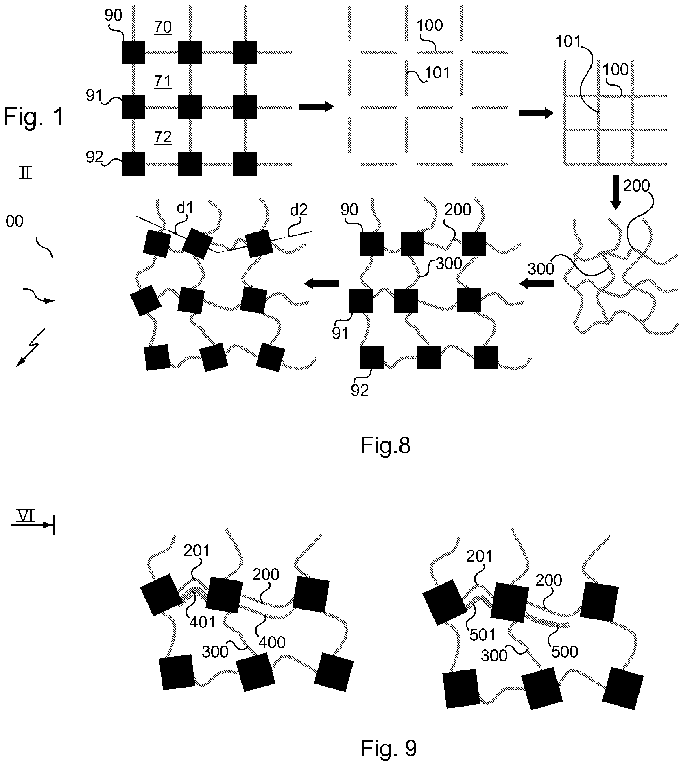

Un exemple de procédé ayant permis de concevoir la matrice de la figure 3 à partir de la structure matricielle (numérique) régulière de la figure 2 est représenté à la figure 8.

Dans une première étape définissant une première matrice numérique intermédiaire, des blocs transistors 90, 91, 92... (voir figures 2 et 8) sont définis, représentant la position de chaque transistor 80, 81, 82... puis, dans une deuxième étape, ils sont isolés de la structure matricielle active initiale. Entre deux blocs transistors consécutifs horizontalement ou verticalement s'étend un segment droit de ligne ou un segment droit de colonne. Dans une troisième étape, on définit une deuxième matrice numérique intermédiaire par rapprochement des segments droits de ligne et des segments droits de colonne qui reliaient les blocs transistors de la première matrice numérique intermédiaire.

Une quatrième étape consiste à mettre du désordre dans la géométrie de la deuxième matrice numérique intermédiaire préalablement obtenue, par déplacement des nœuds de celle-ci et/ou par remplacement des segments droits entre nœuds par un ou plusieurs arcs de cercle successifs.

Les figures 3, 5 et 7 montrent des matrices actives ainsi calculées avec un seul arc de cercle de 60° d'ouverture entre deux nœuds consécutifs. Bien entendu, il est possible, et même préférable en termes de répartition de la diffraction mais plus défavorable en termes de facilité et rapidité de conception et de réalisation, de prévoir plusieurs arcs de cercle sur chaque segment unitaire de ligne d'adressage et de colonne de données, et/ou de varier les courbures des arcs de cercle d'un segment unitaire à un autre ou au sein d'un même segment unitaire.

Chaque segment unitaire courbe (entre deux nœuds consécutifs du réseau déformé obtenu) est ensuite replacé dans la première matrice numérique intermédiaire. Il peut alors être nécessaire de déplacer certains blocs transistors pour assurer les connexions entre les différents segments et les blocs transistors.

Pour finir, optionnellement, on fait pivoter chacun des blocs transistors d'un angle aléatoire compris entre -22,5° et + 22,5° pour mettre du désordre dans les directions longitudinales $d_1$, $d_2$ des transistors. Les inventeurs ont déterminé que la plage angulaire [-22,5°; +22,5°] est à la fois suffisamment large pour obtenir une atténuation satisfaisante des interférences de diffraction dues aux transistors et suffisamment étroite pour éviter une réalisation trop délicate.

Il est à noter que cette rotation aléatoire ou pseudo-aléatoire des transistors n'est pas nécessaire si la longueur d'onde de la lumière arrivant sur la matrice est supérieure à la taille des transistors ; elle trouve son intérêt essentiellement si les transistors ont une taille supérieure à la longueur d'onde ou de l'ordre de celle-ci, en particulier si toutes les dimensions des transistors, de leurs grilles ou électrodes, ou celles de leur cache, sont supérieures à 400 nm.

La structure numérique ainsi définie est une matrice active numérique avec désordre optique. Afin de satisfaire certaines contraintes électriques comme l'égalité, ou la quasi-égalité, des capacités primaires des pixels, une procédure d'optimisation sur la position des blocs transistors peut ensuite être mise en œuvre pour diminuer les écarts, par rapport à une moyenne des aires des pixels, à une valeur inférieure ou égale à 1 %. Là encore, les segments courbes de ligne et de colonne sont ensuite corrigés, si nécessaire, pour assurer la continuité au niveau des blocs transistors.

Une autre procédure d'optimisation sur les capacités secondaires peut aussi, en variante ou en combinaison, être mise en œuvre. La capacité secondaire d'un pixel est déterminée par l'aire du segment unitaire de ligne de capacité de stockage qui correspond au pixel considéré. Les segments unitaires de ligne de capacité de stockage ayant des longueurs différentes dans une matrice déformée selon l'invention, l'aire desdits segments unitaires varie d'un pixel à l'autre dans le cas où la ligne de capacité de stockage a une largeur constante. La largeur de chaque segment unitaire 400, 401 (voir figure 9, dessin de gauche) peut donc être ajustée de façon à ce que les aires des segments unitaires soient sensiblement égales pour tous les pixels, par exemple de façon à ce que les écarts à la moyenne des aires soient inférieurs ou égaux à 1 %. En variante, la largeur de chaque segment unitaire 400, 401 (voir figure 9, dessin de gauche) peut être ajustée de façon à ce que la somme des capacités primaire (aire du pixel) et secondaire (aire du segment correspondant de ligne de capacité de stockage) des pixels varie peu c'est-à-dire de façon à ce que l'écart à la moyenne de cette somme, pour chaque pixel, soit inférieur ou égal à 1% par exemple.

Qu'il s'agisse de la procédure d'optimisation des capacités primaires (c'est-à-dire des aires des pixels) ou d'optimisation des capacités secondaires (c'est-à-dire des aires des segments unitaires des lignes de capacité de stockage 13), on peut par exemple utiliser un algorithme d'optimisation de type gradient de descente qui homogénéise l'aire en minimisant le déplacement des nœuds par rapport à leur position d'origine. Un exemple de routine d'optimisation fonctionne de la manière suivante pour le procédé d'optimisation des aires des pixels :

On calcule la surface de chaque pixel et la valeur moyenne.
Pour chaque bloc et pour chaque direction X et Y, on calcule la variation d'aire de tous les pixels consécutives à un déplacement d'amplitude « dp » d'un transistor. En fait, seuls les 4 pixels directement voisins du bloc sont impactés.

Le problème d'optimisation peut alors s'écrire sous la forme de l'équation matricielle suivante dans le cas d'un réseau de m pixels en X et n pixels en Y:

$$AdX = B$$

avec

$$A = \begin{bmatrix} \Delta aire^{(1,1)}\{dx^{(1,1)}\} & \Delta aire^{(1,1)}\{dy^{(1,1)}\} & \cdots & \Delta aire^{(1,1)}\{dy^{(m,n)}\} \\ \Delta aire^{(2,1)}\{dx^{(1,1)}\} & \Delta aire^{(1,1)}\{dy^{(1,1)}\} & \cdots & \vdots \\ \vdots & \vdots & \ddots & \vdots \\ \Delta aire^{(m,n)}\{dx^{(1,1)}\} & \Delta aire^{(m,n)}\{dy^{(1,1)}\} & \cdots & \Delta aire^{(m,n)}\{dy^{(m,n)}\} \end{bmatrix}$$

$$dX = \begin{bmatrix} dx^{(1,1)} \\ dy^{(1,1)} \\ dx^{(2,1)} \\ dy^{(2,1)} \\ \vdots \\ dx^{(m,n)} \\ dy^{(m,n)} \end{bmatrix}$$

$$B = \begin{bmatrix} aire^{(1,1)} - aire_{moyenne} \\ aire^{(2,1)} - aire_{moyenne} \\ \vdots \\ aire^{(m,n)} - aire_{moyenne} \end{bmatrix}$$

On calcule le vecteur de déplacement dX d'un transistor qui satisfait les équations suivantes (résultat donné par un logiciel de calcul (matlab, C, fortran,...) :

$$\min\left\{ \left\| \begin{bmatrix} A \\ Id_{mn} \end{bmatrix} dX - \begin{bmatrix} B \\ 0 \end{bmatrix} \right\|^2 \right\}$$

où

$$Id_{mn} = \begin{bmatrix} 1 & 0 & 0 \\ 0 & \ddots & 0 \\ 0 & 0 & 1 \end{bmatrix}$$

Géométriquement, cela signifie que l'on cherche la solution qui permet d'égaliser les aires en bougeant le moins possible les blocs transistors dans les directions X et Y. On répète cette opération autant de fois que nécessaire pour obtenir une distribution d'aire de + ou - 1% autour de la valeur moyenne.

Une autre solution pour uniformiser les capacités secondaires consiste à remplacer les lignes continues de capacités de stockage par des segments courbes 500, 501 non nécessairement connectés entre eux mais de longueur et de largeur identiques d'un pixel à un autre, comme illustré sur le dessin de droite de la figure 9.

On obtient ainsi une matrice dont les pixels ont tous la même capacité secondaire. Il est possible de modifier plus avant celle-ci pour obtenir une matrice dont les pixels ont tous la même capacité totale (primaire + secondaire), par exemple si les capacités primaires n'ont pas été précédemment totalement uniformisées. Chaque capacité secondaire peut alors être ajustée (par ajustement de la longueur, ou éventuellement la largeur, du segment de ligne de capacité de stockage correspondant) d'un pixel à un autre de façon à compenser des écarts restants sur les capacités primaires des pixels.

D'autres procédures d'optimisation sont possibles.

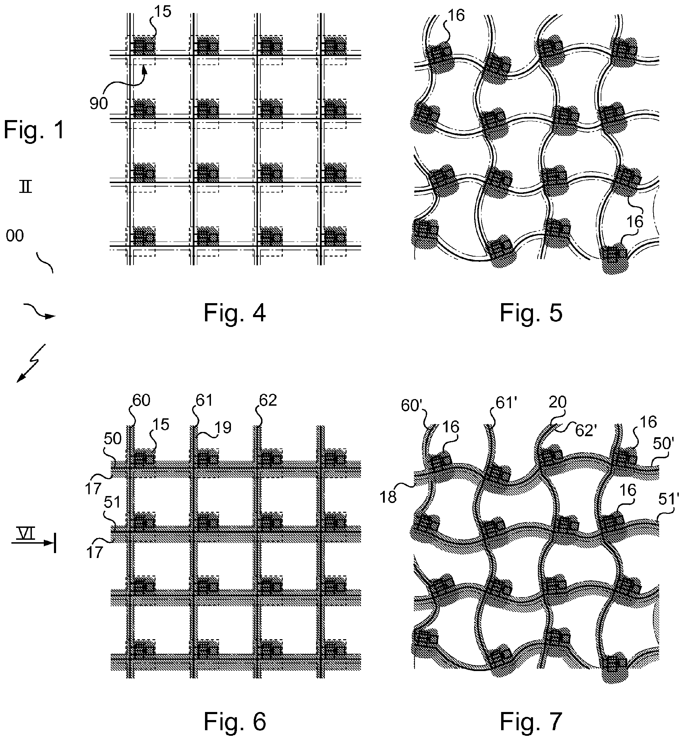

Les figures 4 et 6 montrent d'autres matrices actives régulières connues, à partir desquelles peuvent être obtenues les matrices actives (déformées) selon l'invention illustrées aux figures 5 et 7. Seules les différences entre ces matrices et celles des figures 2 et 3 décrites précédemment seront commentées ci-après.

Outre les éléments précédemment décrits pour la matrice de la figure 2, la matrice active régulière de la figure 4 comprend des caches 15 masquant les transistors de la matrice. Ces caches sont, dans cet exemple, globalement carrés avec un coin tronqué. De tels caches engendrent une diffraction selon deux directions principales (orthogonales) si les dimensions des caches sont supérieures ou égales à la longueur d'onde du faisceau incident. Afin d'atténuer ces effets, le procédé décrit ci-dessus préconise non seulement de faire pivoter les blocs transistors comme précédemment expliqué, mais aussi, dans une variante, d'utiliser des caches ayant des contours courbes avec des coins adoucis comme les caches 16 visibles à la figure 5. Ces caches ne suppriment pas la diffraction mais la répartissent pour que son impact sur l'image soit uniforme ou presque. Un cache parfaitement circulaire offrirait une répartition uniforme des directions de diffraction et donc une suppression des effets indésirables de la diffraction, mais augmenterait de façon trop importante le pourcentage de matière opaque de la matrice et n'est donc pas souhaitable. La forme représentée à la figure 5 offre un bon compromis.

La matrice régulière illustrée à la figure 6 comprend de plus des masques d'ombrage 17, 19 en regard de ses lignes d'adressage et colonnes de données, dont la largeur correspond sensiblement à la distance séparant deux pixels adjacents (respectivement selon la direction Y et selon la direction X). Après transformation selon le procédé décrit ci-dessus d'une structure matricielle numérique régulière identique à la matrice de la figure 6, on obtient une matrice (figure 7) dont les lignes et colonnes courbes sont masquées par des masques d'ombrage 18, 20 également courbes qui suivent les oscillations des lignes d'adressage et colonnes de données de la matrice déformée. La largeur des masques d'ombrage peut être constante ou varier légèrement de façon à former, là encore, des ondulations qui répartissent les directions de diffraction et limitent ainsi la concentration des rayons diffractés selon des directions privilégiées.

L'invention peut faire l'objet de nombreuses variantes par rapport aux modes de réalisation décrits ci-dessus et illustrés, dès lors que celles-ci restent dans le cadre défini par les revendications annexées. Par exemple :

le procédé décrit ci-dessus peut s'appliquer à des structures matricielles à pavage carré, rectangulaire, losange ou hexagonal ;
une ou plusieurs lignes d'adressage ou colonnes de données peuvent comprendre des portions rectilignes de directions variées, successives (et formant par exemple des zigzags) ou non (c'est-à-dire intercalées de portions courbes).

On notera enfin que l'invention s'applique tant à des matrices actives ayant des pixels non matérialisés (telle la matrice de la figure 1) qu'à des matrices actives à pixels matérialisés séparés par des parois (en polymère par exemple).

L'innovation peut être utilisée pour toute fonction optique à commande électrique, et en particulier pour des verres digitaux électrochromes, ou pour toute lentille ophtalmique capable de traiter de l'informatique optique, où l'on veut traiter l'amplitude et l'onde optique qui traverse le composant (par exemple : variation d'amplitude, affichage d'information sur le verre, traitement de la phase (aberration, correction de la vision...)).

## Revendications

1. Lentille ophtalmique comprenant une matrice active comprenant :

des pixels (70'-72', 170', 270'),
des lignes d'adressage (50'-52') servant à la commande des pixels, chaque ligne d'adressage s'étendant entre deux bornes d'extrémité opposées, sans couper une autre ligne ni former une boucle, les lignes d'adressage étant en un matériau conducteur métallique,
des colonnes de données (60'-62') servant à l'alimentation électrique des pixels, chaque colonne de données s'étendant entre deux bornes d'extrémité opposées, sans couper une autre colonne ni former une boucle, les colonnes de données étant en un matériau conducteur métallique,
pour chaque pixel (70'), au moins un transistor (80') agissant comme un interrupteur qui permet de relier électriquement une électrode (11) propre audit pixel à une colonne de données (60') associée audit pixel, lequel interrupteur est commandé par une ligne d'adressage (50') ainsi associée au pixel.

caractérisée en ce que chaque ligne d'adressage (50'-52'), respectivement chaque colonne de données (60'-62'), ondule de manière continue mais non périodique de part et d'autre d'une droite, dite droite d'adressage théorique (50-52), respectivement droite de données théorique (60-62), reliant les deux bornes d'extrémité de ladite ligne d'adressage, respectivement de ladite colonne de données.

**2.** Lentille ophtalmique selon la revendication 1, **caractérisée en ce que** l'amplitude en valeur absolue des oscillations de chaque ligne d'adressage (50'-52'), respectivement de chaque colonne de données (60'-62'), par rapport à la droite d'adressage théorique (50-52) correspondante, respectivement la droite de données (60-62) correspondante, est une variable aléatoire ou pseudo-aléatoire ayant un écart-type à trois sigmas inférieur ou égal à une période moyenne d'alternance des droites d'adressage théoriques, respectivement des droites de données théoriques, laquelle période moyenne d'alternance est définie comme étant une moyenne de l'écartement entre les droites d'adressage théoriques (50-52), respectivement entre les droites de données théoriques (60-62).

**3.** Lentille ophtalmique selon la revendication 2, **caractérisée en ce que** l'écart-type à trois sigmas de l'amplitude en valeur absolue des oscillations de chaque ligne d'adressage (50'-52'), respectivement de chaque colonne de données (60'-62'), est inférieur ou égal à la moitié de la période moyenne d'alternance des droites d'adressage théoriques, respectivement des droites de données théoriques.

**4.** Lentille ophtalmique selon l'une des revendications précédentes, **caractérisée en ce que** la fréquence moyenne des oscillations de chaque ligne d'adressage (50'-52'), respectivement de chaque colonne de données (60'-62'), est comprise entre 1/10ème et 10 fois une fréquence moyenne à laquelle les lignes d'adressage (50'-52'), respectivement les colonnes de données (60'-62'), croisent les colonnes de données (60'-62'), respectivement les lignes d'adressages (50'-52').

**5.** Lentille ophtalmique selon l'une des revendications précédentes, **caractérisée en ce qu'**au moins une ligne d'adressage ou colonne de donnée comporte une succession d'arcs de cercle.

**6.** Lentille ophtalmique selon l'une des revendications précédentes, **caractérisée en ce que** la droite d'adressage théorique (50-52), respectivement droite de données théorique (60-62), de chaque ligne d'adressage (50'-52'), respectivement chaque colonne de données (60'-62'), coïncide avec une ligne moyenne de ladite ligne d'adressage, respectivement colonne de données.

**7.** Lentille ophtalmique selon l'une des revendications précédentes, **caractérisée en ce que** les droites d'adressage théoriques (50-52) sont parallèles entre elles et **en ce que** les droites de données théoriques (60-62) sont parallèles entre elles.

**8.** Lentille ophtalmique selon l'une des revendications précédentes, **caractérisée en ce que** l'aire des pixels (70'-72', 170') varie avec un écart-type inférieur ou égal à 5%.

**9.** Lentille ophtalmique selon l'une des revendications précédentes, **caractérisée en ce que** les transistors (80'-82', 180') présentent des directions longitudinales ($d_1$, $d_2$) aléatoires ou pseudo-aléatoires.

**10.** Lentille ophtalmique selon l'une des revendications précédentes, **caractérisée en ce qu'**elle comprend de plus un cache (16) pour chaque transistor (80'-82') et **en ce que** les caches présentent des directions longitudinales ($d_1$, $d_2$) aléatoires ou pseudo-aléatoires.

**11.** Lentille ophtalmique selon l'une des revendications 7 ou 8, **caractérisée en ce que** la direction longitudinale de chaque transistor (80'-82') et/ou de son cache (16) forme un angle aléatoire ou pseudo aléatoire compris entre -22,5° et +22,5° avec la droite d'adressage théorique (50-52) de la ligne d'adressage auquel le transistor est relié.

**12.** Lentille ophtalmique selon l'une des revendications précédentes, **caractérisée en ce qu'**elle comprend de plus un masque d'ombrage (18, 20) pour chaque ligne d'adressage (50'-52') ou colonne de données (60'-62').

**13.** Lentille ophtalmique selon l'une des revendications précédentes, **caractérisée en ce qu'**elle comprend de plus, pour chaque ligne d'adressage (50'-52'), une ligne de capacité de stockage suivant ladite ligne d'adressage, et **en ce que** l'aire d'une portion unitaire (400, 401, 500, 501) de ligne de capacité de stockage s'étendant entre deux colonnes de données successives présente une distribution ayant un écart-type inférieur ou égal à 5%.

**14.** Lentille ophtalmique selon l'une des revendications précédentes, **caractérisée en ce que** les pixels contiennent des substances d'indices optiques différents.

**15.** Lentille ophtalmique selon l'une des revendications précédentes, **caractérisée en ce que** chaque pixel est fermé par des parois.

## EP 3 452 871 B1

**Patentansprüche**

1. Ophthalmische Linse, welche eine aktive Matrix umfasst, welche umfasst:

   Pixel (70'-72', 170', 270'),
   Adressierungsleitungen (50'-52'), die zur Steuerung der Pixel dienen, wobei sich jede Adressierungsleitung zwischen zwei einander gegenüberliegenden Endklemmen erstreckt, ohne eine andere Leitung zu schneiden oder eine Schleife zu bilden, wobei die Adressierungsleitungen aus einem leitenden metallischen Material bestehen,
   Datenspalten (60'-62'), die zur Stromversorgung der Pixel dienen, wobei sich jede Datenspalte zwischen zwei einander gegenüberliegenden Endklemmen erstreckt, ohne eine andere Spalte zu schneiden oder eine Schleife zu bilden, wobei die Datenspalten aus einem leitenden metallischen Material bestehen,
   für jedes Pixel (70') wenigstens einen Transistor (80'), der als ein Schalter fungiert, der es ermöglicht, eine dem Pixel (11) eigene Elektrode (11) mit einer dem Pixel zugeordneten Datenspalte (60') elektrisch zu verbinden,
   wobei der Schalter von einer Adressierungsleitung (50') gesteuert wird, die auf diese Weise dem Pixel zugeordnet ist,

   **dadurch gekennzeichnet, dass** jede Adressierungsleitung (50'-52') bzw. jede Datenspalte (60'-62') kontinuierlich, jedoch nicht periodisch beiderseits einer Geraden, theoretische Adressierungsgerade (50-52) bzw. theoretische Datengerade (60-62) genannt, welche die zwei Endklemmen der Adressierungsleitung bzw. der Datenspalte verbindet, gewellt verläuft.

2. Ophthalmische Linse nach Anspruch 1, **dadurch gekennzeichnet, dass** der absolute Betrag der Amplitude der Schwingungen jeder Adressierungsleitung (50'-52') bzw. jeder Datenspalte (60'-62') in Bezug auf die entsprechende theoretische Adressierungsgerade (50-52) bzw. die entsprechende Datengerade (60-62) eine Zufallsvariable oder Pseudozufallsvariable ist, die eine 3-Sigma-Standardabweichung aufweist, die kleiner oder gleich einer mittleren Wechselperiode der theoretischen Adressierungsgeraden bzw. der theoretischen Datengeraden ist, wobei die mittlere Wechselperiode als ein Mittelwert des Abstands zwischen den theoretischen Adressierungsgeraden (50-52) bzw. zwischen den theoretischen Datengeraden (60-62) definiert ist.

3. Ophthalmische Linse nach Anspruch 2, **dadurch gekennzeichnet, dass** die 3-Sigma-Standardabweichung des absoluten Betrags der Amplitude der Schwingungen jeder Adressierungsleitung (50'-52') bzw. jeder Datenspalte (60'-62') kleiner oder gleich der Hälfte der mittleren Wechselperiode der theoretischen Adressierungsgeraden bzw. der theoretischen Datengeraden ist.

4. Ophthalmische Linse nach einem der vorhergehenden Ansprüche, **dadurch gekennzeichnet, dass** die mittlere Frequenz der Schwingungen jeder Adressierungsleitung (50'-52') bzw. jeder Datenspalte (60'-62') zwischen 1/10 und dem 10-Fachen einer mittleren Frequenz liegt, mit welcher die Adressierungsleitungen (50'-52') bzw. die Datenspalten (60'-62') die Datenspalten (60'-62') bzw. die Adressierungsleitungen (50'-52') kreuzen.

5. Ophthalmische Linse nach einem der vorhergehenden Ansprüche, **dadurch gekennzeichnet, dass** wenigstens eine Adressierungsleitung oder Datenspalte eine Folge von Kreisbögen aufweist.

6. Ophthalmische Linse nach einem der vorhergehenden Ansprüche, **dadurch gekennzeichnet, dass** die theoretische Adressierungsgerade (50-52) bzw. theoretische Datengerade (60-62) jeder Adressierungsleitung (50'-52') bzw. jeder Datenspalte (60'-62') mit einer Mittellinie der Adressierungsleitung bzw. Datenspalte zusammenfällt.

7. Ophthalmische Linse nach einem der vorhergehenden Ansprüche, **dadurch gekennzeichnet, dass** die theoretischen Adressierungsgeraden (50-52) zueinander parallel sind, und dadurch, dass die theoretischen Datengeraden (60-62) zueinander parallel sind.

8. Ophthalmische Linse nach einem der vorhergehenden Ansprüche, **dadurch gekennzeichnet, dass** die Fläche der Pixel (70'-72', 170') mit einer Standardabweichung variiert, die kleiner oder gleich 5 % ist.

9. Ophthalmische Linse nach einem der vorhergehenden Ansprüche, **dadurch gekennzeichnet, dass** die Transistoren (80'-82', 180') zufällige oder pseudozufällige Längsrichtungen ($d_1$, $d_2$) aufweisen.

10. Ophthalmische Linse nach einem der vorhergehenden Ansprüche, **dadurch gekennzeichnet, dass** sie außerdem

14

eine Abdeckung (16) für jeden Transistor (80'-82') umfasst, und dadurch, dass die Abdeckungen zufällige oder pseudozufällige Längsrichtungen ($d_1$, $d_2$) aufweisen.

11. Ophthalmische Linse nach einem der Ansprüche 7 oder 8, **dadurch gekennzeichnet, dass** die Längsrichtung jedes Transistors (80'-82') und/oder seiner Abdeckung (16) einen zufälligen oder pseudozufälligen Winkel zwischen -22,5° und +22,5° mit der theoretischen Adressierungsgeraden (50-52) der Adressierungsleitung, mit welcher der Transistor verbunden ist, bildet.

12. Ophthalmische Linse nach einem der vorhergehenden Ansprüche, **dadurch gekennzeichnet, dass** sie außerdem eine Schattierungsmaske (18, 20) für jede Adressierungsleitung (50'-52') oder Datenspalte (60'-62') umfasst.

13. Ophthalmische Linse nach einem der vorhergehenden Ansprüche, **dadurch gekennzeichnet, dass** sie außerdem für jede Adressierungsleitung (50'-52') eine Speicherkapazitätsleitung umfasst, die der Adressierungsleitung folgt, und dadurch, dass die Fläche eines Einzelabschnitts (400, 401, 500, 501) der Speicherkapazitätsleitung, der sich zwischen zwei aufeinander folgenden Datenspalten erstreckt, eine Verteilung mit einer Standardabweichung aufweist, die kleiner oder gleich 5 % ist.

14. Ophthalmische Linse nach einem der vorhergehenden Ansprüche, **dadurch gekennzeichnet, dass** die Pixel Stoffe mit unterschiedlichen optischen Indizes enthalten.

15. Ophthalmische Linse nach einem der vorhergehenden Ansprüche, **dadurch gekennzeichnet, dass** jedes Pixel von Wänden umschlossen ist.


**Claims**

1. Ophthalmic lens comprising an active matrix array comprising:

   pixels (70'-72', 170', 270'),
   address rows (50'-52') serving to control the pixels, each address row extending between two opposite end terminals, without cutting another row or forming a loop, the address rows being made of a conductive metal material,
   data columns (60'-62') serving to supply the pixels with electrical power, each data column extending between two opposite end terminals, without cutting another column or forming a loop, the data columns being made of a conductive metal material,
   for each pixel (70'), at least one transistor (80') acting as a switch that allows an electrode (11) specific to said pixel to be electrically connected to a data column (60') associated with said pixel, which switch is controlled via an address row (50') thus associated with the pixel,

   **characterized in that** each address row (50'-52'), each data column (60'-62'), respectively, undulates continuously but non-periodically from one side to the other of a straight line, called the theoretical straight address line (50-52), the theoretical straight data line (60-62), respectively, connecting the two end terminals of said address row, of said data column, respectively.

2. Ophthalmic lens according to Claim 1, **characterized in that** the amplitude in absolute value of the oscillations of each address row (50'-52'), of each data column (60'-62'), respectively, with respect to the corresponding theoretical straight address line (50-52), the corresponding straight data line (60-62), respectively, is a pseudo-random or random variable having a three-sigma standard deviation lower than or equal to an average period of alternation of the theoretical straight address lines, the theoretical straight data lines, respectively, which average period of alternation is defined as being an average of the spacing between the theoretical straight address lines (50-52), between the theoretical straight data lines (60-62), respectively.

3. Ophthalmic lens according to Claim 2, **characterized in that** the three-sigma standard deviation of the amplitude in absolute value of the oscillations of each address row (50'-52'), of each data column (60'-62'), respectively, is lower than or equal to half the average period of alternation of the theoretical straight address lines, of the theoretical straight data lines, respectively.

4. Ophthalmic lens according to one of the preceding claims, **characterized in that** the average frequency of the oscillations of each address row (50'-52'), of each data column (60'-62'), respectively, is comprised between 1/10$^{th}$ and 10 times an average frequency at which the address rows (50'-52'), the data columns (60'-62'), respectively, cross the data columns (60'-62'), the address rows (50'-52'), respectively.

5. Ophthalmic lens according to one of the preceding claims, **characterized in that** at least one address row or data column includes a succession of circular arcs.

6. Ophthalmic lens according to one of the preceding claims, **characterized in that** the theoretical straight address line (50-52), the theoretical straight data line (60-62), respectively, of each address row (50'-52'), of each data column (60'-62'), respectively, coincides with an average line of said address row, of said data column, respectively.

7. Ophthalmic lens according to one of the preceding claims, **characterized in that** the theoretical straight address lines (50-52) are parallel to one another and **in that** the theoretical straight data lines (60-62) are parallel to one another.

8. Ophthalmic lens according to one of the preceding claims, **characterized in that** the area of the pixels (70'-72', 170') varies with a standard deviation lower than or equal to 5%.

9. Ophthalmic lens according to one of the preceding claims, **characterized in that** the transistors (80'-82', 180') have longitudinal directions ($d_1$, $d_2$) that are random or pseudo-random.

10. Ophthalmic lens according to one of the preceding claims, **characterized in that** it in addition comprises a shield (16) for each transistor (80'-82') and **in that** the shields have longitudinal directions ($d_1$, $d_2$) that are random or pseudo-random.

11. Ophthalmic lens according to either of Claims 7 and 8, **characterized in that** the longitudinal direction of each transistor (80'-82') and/or its shield (16) makes a pseudo-random or random angle comprised between -22.5° and +22.5° to the theoretical straight address line (50-52) of the address row to which the transistor is connected.

12. Ophthalmic lens according to one of the preceding claims, **characterized in that** it in addition comprises a shadow mask (18, 20) for each address row (50'-52') or data column (60'-62').

13. Ophthalmic lens according to one of the preceding claims, **characterized in that** it in addition comprises, for each address row (50'-52'), a storage capacitance row following said address row, and **in that** the area of a unitary section (400, 401, 500, 501) of storage capacitance row extending between two successive data columns has a distribution having a standard deviation lower than or equal to 5%.

14. Ophthalmic lens according to one of the preceding claims, **characterized in that** the pixels contain substances of different refractive indices.

15. Ophthalmic lens according to one of the preceding claims, **characterized in that** each pixel is closed by walls.

Fig. 1

Fig. 1

Fig. 2

Fig. 3

Fig. 1

II

00

Fig. 4

Fig. 5

Fig. 6

Fig. 7

Fig. 1

Fig.8

Fig. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040098308 A1
- US 20140172379 A1